# EUROPEAN PATENT APPLICATION

(11) **EP 1 489 859 A2**
(43) Date of publication of application: **22.12.2004**
(21) Application number: 04014117.8
(22) Date of filing: 16.06.2004
(51) Int. Cl.: H04N 13/04

(54) **Display device**

(30) Priority: 17.06.2003 JP 2003172427
(71) Applicant: Sea Phone Co., Ltd., Ogaki, Gifu, 503-0953 (JP); Kabushiki Kaisha Toyota Jidoshokki, Kariya-shi, Aichi-ken (JP)
(72) Inventor: Hattori, Tomohiko Sea Phone Co.Ltd, Gifu 503-0953 (JP); Yokota, Isao, K.K. Toyota Jidoshokki, Kariya-shi Aichi-ken (JP); Noritake, Kazuto K.K. Toyota Jidoshokki, Kariya-shi Aichi-ken (JP); Tsuzaka, Masanori K.K. Toyota Jidoshokki, Kariya-shi Aichi-ken (JP); Tanase, Katsuya K.K. Toyota Jidoshokki, Kariya-shi Aichi-ken (JP)
(74) Representative: Leson, Thomas Johannes Alois, Dipl.-Ing.

(57) **Abstract**

A display device that can be made to be smaller and thinner. The display device includes a light source including a plurality of emitting regions disposed in a plane, a light emission controller which performs switching control of each emitting region between an illuminating state and a blacked out state, a transmission type image display panel including a plurality of pixels through which light emitted from the light source is transmitted, an image signal output which sends each pixel a set of associated image data, and a light directing member which includes a structure for directing light that has passed through the pixels and which is disposed opposingly to the transmission type image display panel. A set of the emitting regions are arranged in the horizontal direction of the transmission type image display panel to oppose to an associated pixel of the transmission type image display panel.

## Description

The present invention relates to a display device, in particular a display device displaying different images onto different locations without using any light converging member.

Multi-view three dimensional displays which provide an observer a sense of observing a three dimensional image as if viewing from its circumference are known. Such images are conventionally provided by forcing the observer' s eyes to sweep in the horizontal direction. Japanese Patent Laid-Open Publication 11-308642 discloses a three dimensional video display device which has a light source including a plurality of light emitting regions and capable of turning on and off the light in each light emitting region. The display device further includes an image display means interchangeably displaying in terms of time, eight images separated with a parallax between each another. A light incident side lenticular lens (hereinafter also referred to as a "light converging member") and a light exit side lenticular lens (hereinafter also referred to as a "light directing member") are provided in the display device. The light incident side lenticular lens introduces light from the light source to the pixels, and forms within each pixel a narrow width region for the light coming from the light source to reach each light emitting region that has narrower width than each pixel. The light exit side lenticular lens converges light emitted from the narrow width region, at locations separated from the display by a predetermined distance . The light is converged at the locations with interpupillary distance or a smaller distance. The three dimensional display device further includes a light emitting controller which turns on light emitting regions in sequence pursuant to the display timing of the images.

However, this three dimensional display device is disadvantageous in down-sizing.

The present invention provides a display device which can be made smaller and thinner in size without using a light converging member. The display device displays a plurality of images respectively in different positions without reducing resolution in the horizontal direction when compared to a two dimensional image displayed by the same liquid crystal panel.

In order to achieve the objects of the invention, a display device is provided, comprising a light source including a plurality of emitting regions disposed in a plane. Further included is a light emission controller which performs switching control of each emitting region between its illuminating state andblacked out state. The display device also has a transmission type image display panel including a plurality of pixels through which light emitted from the light source is transmitted to display an image on the display panel. Additionally included is an image signal output which sends out to each pixel a set of associated image data. Finally, the display device includes a light directing member which includes a structure for directing light that has passed through the pixels and which is disposed opposingly to the transmission type image display panel. In this regard, a set of the emitting regions are arranged in the horizontal direction of the transmission type image display panel to oppose to an associated pixel of the transmission type image display panel. Specifically, the image signal output sequentially sends out to each pixel a set of associated image data for a plurality of images. Thus, the light emission controller controls each emitting region to illuminate only a part of the plurality of the emitting regions and to sequentially switch the illuminated emitting regions.

The invention, together with objects and advantages thereof, may best be understood by reference to the following description of the presently preferred embodiments together with the accompanying drawings in which:
FIG. 1 is a cross sectional view of a transmission type liquid crystal display device according to one embodiment of the invention;
FIG. 2 (a) is a cross sectional view of an essential part of the transmission type liquid crystal display device of FIG. 1;
FIG. 2(b) is an equivalent circuit diagram of the transmission type liquid crystal display device of FIG. 1;
FIG. 3 is a diagram showing image signals input from the outside to the image signal output portion of the transmission type liquid crystal display device of FIG. 1;

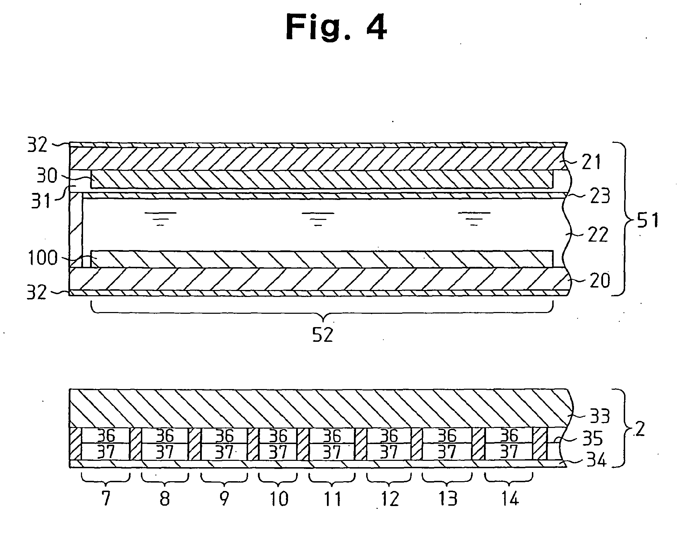

FIG. 4 is a cross sectional view of a transmission type liquid crystal display device according to another embodiment;
FIG. 5 is a perspective view of the transmission type liquid crystal display device of FIG. 4;
FIG. 6 is a cross sectional view of a transmission type liquid crystal display device of a further embodiment of the invention;
FIG. 7 is a perspective view of the transmission type liquid crystal display device of the embodiment of FIG. 6; and
FIG. 8 is a cross sectional view of a transmission type liquid crystal display device of yet another embodiment.

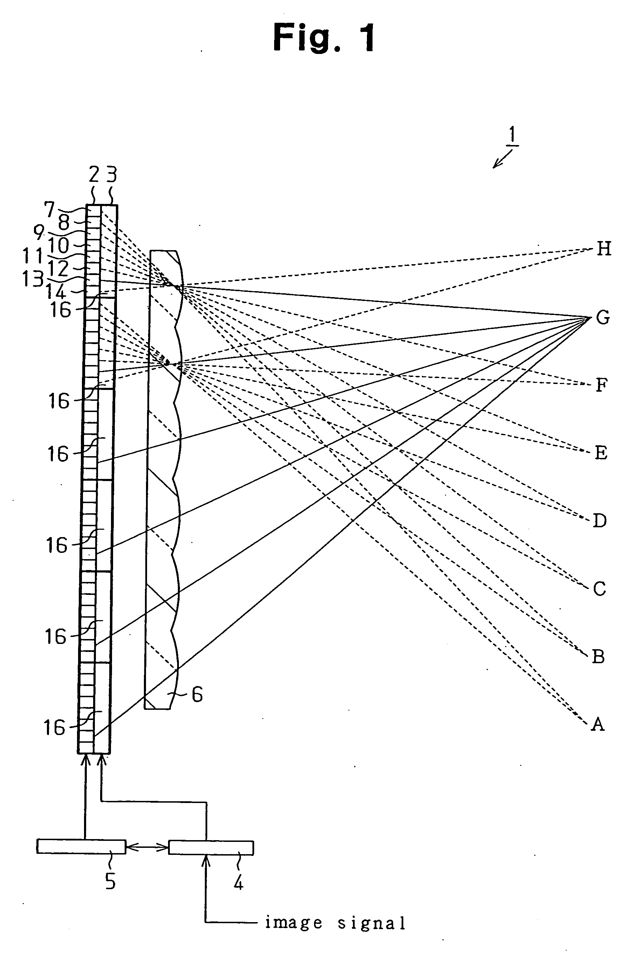

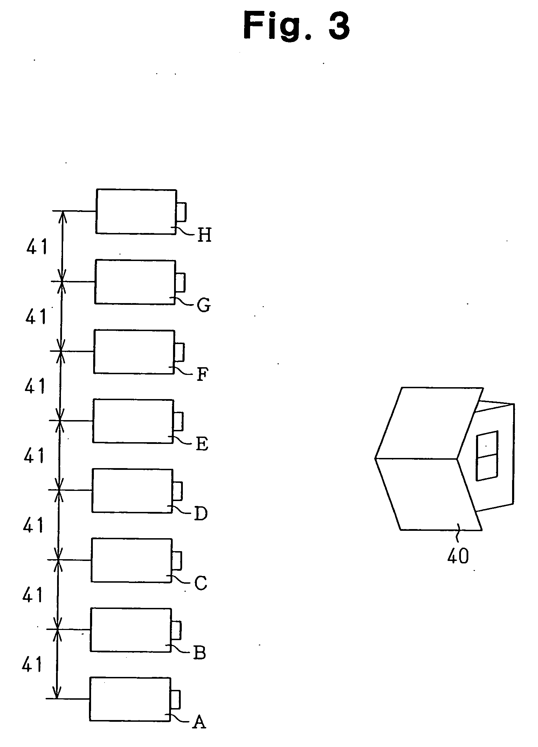

A first embodiment of the invention of a transmission type liquid crystal display device displaying eight different images is described by referring to FIGs. 1-3.

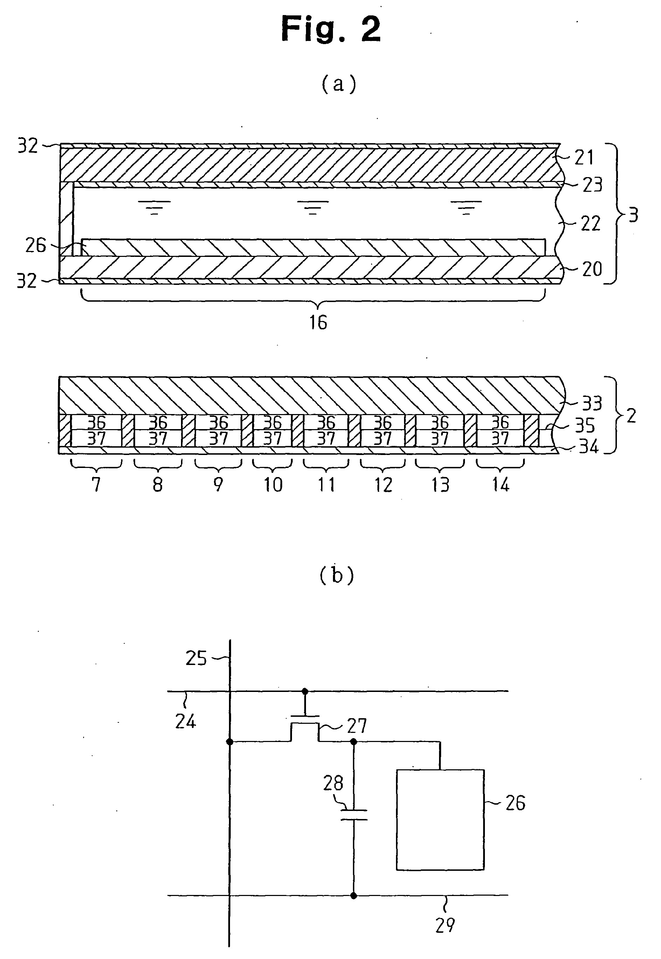

A transmission type liquid crystal display device 1 in FIGS. 1 and 2 comprises a liquid crystal panel 3 used for a transmission type image display panel, an image signal output 4, a light emission controller 5, a lenticular lens 6 used for the light directing member, and an organic electroluminescence device 2 used for a light source. The liquid crystal panel 3 uses known thin film transistor LCDs.

The liquid crystal panel 3 includes a first transparent substrate 20 and a second transparent substrate 21 that are disposed to oppose each other, and a liquid crystal layer 22 is held between the first and second transparent substrates. Polarizers 32 are disposed on the outer surfaces of the first transparent substrate 20 and the second transparent substrate 21.

A scanning line 24, a signal line 25, a pixel electrode 26, a thin filmtransistor (TFT) 27 as a driver, a storage capacitor 28 and a storage capacitor line 29 are disposed on a side contacting the liquid crystal layer 22 of the first transparent substrate 20 as shown by an equivalent circuit shown in FIG. 2 (b) to form each pixel 16 as a group.

The TFT 27 which functions as a switching element is connected to an intersection of the scanning line 24 and the signal line 25 that is arranged to intersect the scanning line 24.

A gate electrode of the TFT 27 is connected to the scanning line 24, a source electrode (or a drain electrode) to the signal line 25, and a drain electrode (or the source electrode) to the pixel electrode 26.

The storage capacitor 28 for holding charging electricity is connected in parallel to the pixel electrode 26. The storage capacitor 28 forms a capacitor Cs between the pixel electrode 26 and the storage capacitor line 29. Note that a constant electric potential is applied from an outside control circuit that is not shown in the figures.

The operation of the equivalent circuit shown in FIG. 2(b) is described below.

When an image data is supplied to the signal line 25 and a line selection pulse is output to the scanning line 24 in synchronization with the supply of the image data, the source and drain of the TFT 27 are switched to the conducting state. The image data supplied to the signal line 25 is thereby written to the pixel electrode 26 by way of the TFT 27. A voltage which corresponds to the supplied image data is then applied to each pixel electrode 26. A display image as a whole is formed by respectively driving the liquid crystal layer 22 opposing the pixel electrodes 26.

An indium tin oxide (ITO) electrode 23 which functions as a common electrode associated with the pixel electrode 26 is formed on the entire surface on a side contacting the liquid crystal layer 22 of the second transparent substrate 21.

The organic electroluminescence device 2 is provided with a plurality of partition walls 35 with the same pitch as the pixel pitch (the distance between a pixel and its adjacent pixel) of the liquid crystal panel 3. In between each pair of partition walls, a transparent electrode 36 formed from indium tin oxide (ITO), an organic layer 37 including an emitting layer and a metal electrode 34 are successively laminated. The transparent electrode 36 and the organic layer 37 are parallel to the scanning lines 24 and divided into stripes to dispose the emitting regions 7, 8, 9, 10, 11, 12, 13, 14 in the horizontal direction of the liquid crystal panel 3 to be opposed to a single pixel 16 of the liquid crystal panel 3. In other words, the transparent electrode 36 and the organic layer 37 are divided into stripes so that emitting regions with a number corresponding to the number of the display images are opposingly disposed to the single pixel 16 of the liquid crystal panel 3.

Note that the term "opposed" used herein includes the state in which two surfaces are opposed in close contact to each other.

The lenticular lens 6 is opposed to an observed side of the liquid crystal panel 3 and is spaced apart from the liquid crystal panel 3. The lenticular lens 6 is provided with a means for providing direction to light emitted from the organic electroluminescence device 2 by a number corresponding to the number of pixels in the liquid crystal panel 3.

The image signal output 4 comprises a general information processing unit such as a microcomputer, and outputs image data to each pixel 16 of the liquid crystal panel 3 by an image signal inputted from the outside. In the embodiment, images of anobject 40 are taken by eight cameras a, b, c, d, e, f, g and h which are spaced apart with a distance 41. The eight images taken by each camera are inputted into the image signal output portion 4 and are then input into the liquid crystal panel 3 after processing the image signals for time division multiplexing display in the order of a to h.

Note that the image data output to a pixel is image data, which displays a portion of an observed image.

The light emission controller 5 comprises a logic part and a driving part. The logic part performs switching control of the emitting regions 7, 8, 9, 10, 11, 12, 13, 14 in each pixel of the organic electroluminescence device 2. The driving part applies predetermined voltage to each emitting region 7, 8, 9, 10, 11, 12, 13, 14 . The light emission controller 5 controls successive switching and emitting of each emitting region of a number corresponding to the number of kind of images displayed. The emitting regions positioned at the same position within each pixel 16 is controlled to simultaneously illuminate and black out.

For example, the emitting regions corresponding to emitting region number 7 in all of the pixels 16 are illuminated at the same time while the emitting regions corresponding to emitting region numbers 8,9,10,11,12,13,14 are blacked out. When the emitting regions corresponding to number 8 are then illuminated, other emitting region numbers 7,9,10,11,12,13,14 are all blacked out. The emitting regions corresponding to numbers 9, 10, 11, 12, 13, 14 are controlled thereafter in the same manner to simultaneously illuminate and blackout.

The operation of successively illuminating the emitting regions 7,8,9,10,11,12,13,14 and the emitting regions corresponding to these in each pixel is performed at a timing substantially the same as the switching of the display image in the liquid crystal panel 3 in response to the image data transmitted from the image signal output 4. In particular in the embodiment, the emitting region 7 is illuminated in synchronization with displaying on each pixel 16 of the liquid crystal panel 3 the image data of an image frame taken by the camera a among the time division multiplexing signal outputted to each pixel 16. The emitting region 8 is illuminated in synchronization with the display on each pixel 16 of the display data of an image frame taken by the camera b. The emitting region 9 is illuminated in synchronization with the display on each pixel 16 of the display data of an image frame taken by the camera c. The emitting region 10 is illuminated in synchronization with the display on each pixel 16 of the display data of an image frame taken by the camera d. The emitting region 11 is illuminated in synchronization with the display on each pixel 16 of the display data of an image frame taken by the camera e. The emitting region 12 is illuminated in synchronization with the display on each pixel 16 of the display data of an image frame taken by the camera f. The emitting region 13 is illuminated in synchronization with the display on each pixel 16 of the display data of an image frame taken by the camera g. The emitting region 14 is illuminated in synchronization with the display on each pixel 16 of the display data of an image frame taken by the camera h.

Note that strictly speaking, there is a time difference between the successive illuminating operations of the emitting regions and the timings in which switching of the display images in the liquid crystal panel 3 are started. However, the difference is so small to be negligible so that these operations are described as being synchronized.

The operation of the transmission type liquid crystal display device 1 described above is explained in more detail by referring to FIG. 1.

First, when the image data of the image frame by the camera a among the time division multiplexing signals is output to each pixel 16 from the image signal output 4, the image frame of the camera a is displayed. In synchronization with the display, a voltage is applied between the electrodes of the organic electroluminescence device 2 by the light emission controller 5 to emit white colored light from the emitting regions 7 of each pixel 16 towards the liquid crystal panel 3 at the same time.

The light entering into the liquid crystal panel 3 passes through each pixel 16 of the liquid crystal panel 3. The light is then emitted with a predetermined angle with respect to the front surface of the transmission type liquid crystal display device 1 by passing through the lenticular lens 6. Lights are similarly emitted by way of other pixels 16 and an observer can recognize the image frame by the camera 1 at an observation point A at which each emitted light ray passes in common.

When the image data of the image frame by the camera b among the time division multiplexing signal is output to each pixel 16 of the liquid crystal panel 3 from the image signal output 4, the image frame of the camera b is displayed. In synchronization with the display, the emitting region 7 that is emitting light is blacked out and then the emitting region 8 is illuminated. The light emitted from the emitting region 8 passes through each pixel 16 of the liquid crystal panel 3 and then passes through the lenticular lens 6. The image frame taken by the camera b can be recognized at an observation point B in the same manner as the above described observation point A.

The images from cameras c,d,e,f,g, and h corresponding to the emitting regions 9,10,11,12,13 and 14 are thereafter recognized respectively at observation points C,D,E,F,G and H by successive illumination of the emitting regions 9, 10, 11, 12, 13 and 14.

When the conversion of the above described emitting regions is repeated at a rate exceeding a predetermined period, different images are displayed and made visible at different observation points simultaneously so that a plurality of images can be displayed at respectively different positions without decreasing the resolution in the horizontal direction, as compared to a two dimensional image displayed by using the same liquid crystal panel.

Accordingly in the first embodiment, the light from the light source need not converge at each pixel since a plurality of emitting regions are disposed in the light source to oppose a single pixel of the liquid crystal panel in the horizontal direction of the liquid crystal panel. Therefore, a plurality of different images can be displayed at respectively different positions without using any converging member such as lenticular lens between the liquid crystal panel and the light source.

An area light emitting device is capable of displaying images without decreasing the horizontal resolution because the emitting regions can be made small by forming them per minute section. Further, a plurality of images can be displayed with stability and with high resolution due to increased response speed.

A liquid crystal panel 51 according to a second embodiment is formed with a color filter 30, a passivation film 31, ITO electrode 23 used for the common electrode that are formed in this order on a surface on which the liquid crystal panel 51 contacts the liquid crystal layer 22 over the second transparent substrate 21. Three subpixels are arranged in the horizontal direction of the liquid crystal panel 51 in each pixel on a side of the first transparent substrate 20 that is in contact with the liquid crystal layer 22 to enable the single pixel to respectively display red (R), green (G) and blue (B). Each subpixel comprises the pixel electrode 100 and, the scanning line, the signal line, the thin film transistor, the storage capacitance and a capacitance line which are not shown in the figures. Emitting regions 7,8,9,10,11,12,13,14 are arranged in the horizontal direction of the liquid crystal panel 51 to oppose a single subpixel 52. Other structures are the same as those described with respect to the first embodiment.

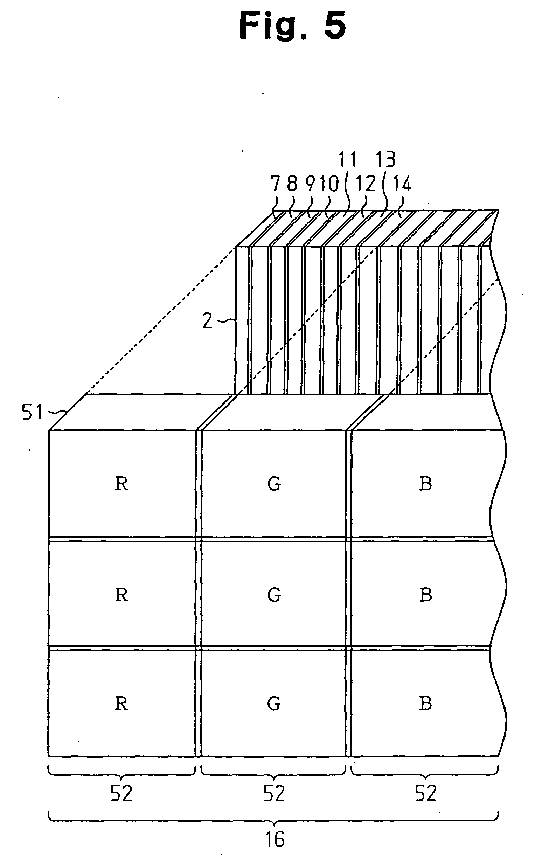

The color filter 30 is formed with R, G and B regions that are arranged in the horizontal direction in a single pixel of the liquid crystal panel 51 as shown in FIG. 5.

According to the second embodiment, the lights corresponding to the three primary colors and emitted from each pixel are separately transmitted through the convex potion of the lenticular lens to reproduce a colored image at each observation point. Therefore, a plurality of colored images can be displayed at respectively different positions without using the light directing member. Further, a conventionally used liquid crystal panel can be used.

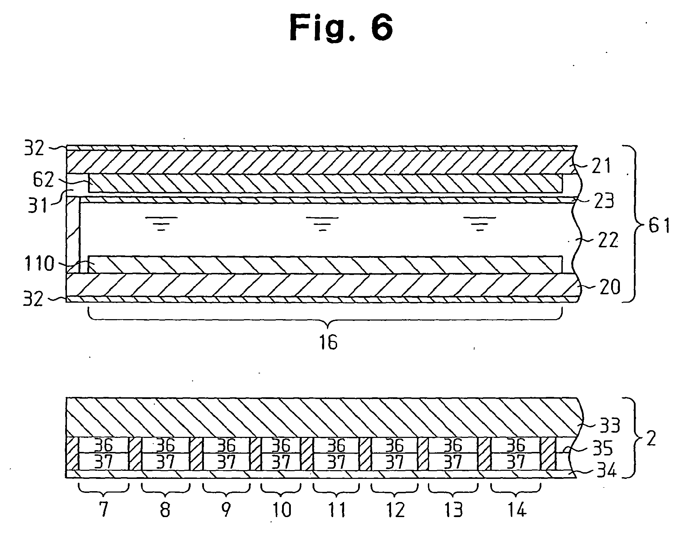

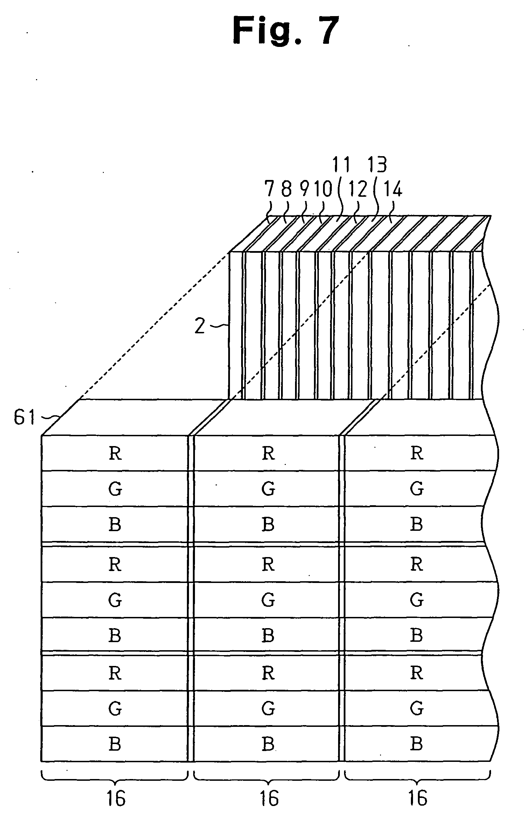

The liquid crystal panel 61 according to a third embodiment of the invention shown in FIG. 6 is formed with the color filter 62, the passivation film 31 and the ITO electrode 23 for the common electrode in this order on a surface of the second transparent substrate 21 where it is in contact with the liquid crystal layer 22. Three subpixels are arranged in the vertical direction of the liquid crystal panel 51 in each pixel on a side of the first transparent substrate 20 that is in contact with the liquid crystal layer 22 to enable the single pixel to respectively display red (R), green (G) and blue (B). Each subpixel comprises the pixel electrode 110 and, the scanning line, the signal line, the thin film transistor, the storage capacitance and a capacitance line which are not shown in the figures. As shown in FIG. 7, the color filter 62 is formed with red, green and blue regions that are displayed to be arranged in the vertical direction of the liquid crystal panel 61 in a single pixel. Other structures are the same as those described with respect to the first embodiment.

According to the third embodiment, a plurality of colored images can be displayed at respectively different positions without using the light directing member. Further, since light can enter in a substantially uniform manner into the subpixels regardless of the horizontal positions of the emitting regions when the subpixels are arranged in the vertical direction in each pixel, there is no variance in the chromacity of the displayed images dependent on the illuminated emitting region.

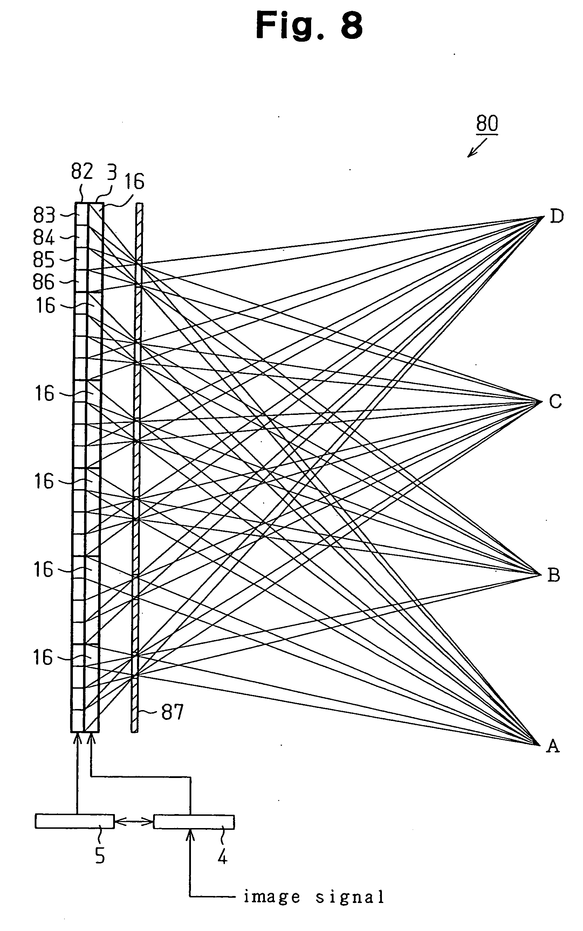

A transmission type liquid crystal display device 80 of the fourth embodiment shown in FIG. 8 is provided with emitting regions 83, 84, 85 and 86 opposed to a single pixel 16 of the liquid crystal panel 3 in its horizontal direction. In the fourth embodiment, a parallax barrier 87 is disposed instead of the lenticular lens to oppose to and spaced away from the liquid crystal panel. The parallax barrier 87 is a specific filter type member provided with vertical slits on the surface to provide direction to the light due to the fine slits.

It should be apparent to those skilled in the art that the present invention may be embodied in many other specific forms without departing fromthe spirit or scope of the invention. Particularly, it should be understood that the invention may be embodied in the following forms.

While the embodiments described above used the organic electroluminescence device for the area light emitting device, the area light emitting device is not limited to the organic electroluminescence device, and can be for example an inorganic electroluminescence device. Similar advantages to those described with respect to the organic electroluminescence devices can also be obtained in such cases.

In the embodiments described above, all of the emitting regions positioned at the same position within each pixel are controlled to emit light at the same time. However, the position of an emitting region in one pixel and the position of an emitting region in another pixel can be differed, for example, an emitting region corresponding to position number 7 of one pixel shown in FIG. 2(a) and an emitting region corresponding to position number 14 in another pixel can be illuminated simultaneously. A plurality of different images can also be displayed in this structure without using the light directing member. Note in this case however, that the image corresponding to the illuminated emitting region needs to be output to each pixel of the liquid crystal panel.

In the embodiments described above, all of the emitting regions that correspond to the same position in each pixel are controlled to emit light at the same time. However, the emitting regions may be selected depending upon the usage. For example, when images for the left pupil are displayed at the observation point A and images for the right pupil are displayed at the observation point B and the observation points A and B are separated with a distance between the pupils, three dimensional images can be displayed between the observation points A and B. Images the same as those displayed at the observation point A can be displayed at observation points C, E and G by illumination emitting regions 9, 11 and 13 at the same time as the illumination of the emitting region 7 and blacking out the emitting regions 8, 10, 12 and 14. On the other hand, the same three-dimensional images as those displayed at the observation points A and B can be displayed at observation points between C and D, E and F, and G and H by blacking out emitting regions 7, 9, 11 and 13 as well as the emitting region 8 when the emitting regions 10, 12 and 14 are illuminated because the same images as those observed at the observation point B can be obtained at observation points D, F and H.

While the transparent electrode and the organic layer are divided in the embodiments described above to provide a plurality of emitting regions in the horizontal direction of the liquid crystal panel, they can also be divided into the vertical direction of the liquid crystal panel. Similar advantages of the invention can also be obtained in this case.

Image signals of eight kinds of images are input into the image signal output 4 from the outside, processed to display time division multiplexed image signal in the order of a to h and then output to the liquid crystal panel 3 in the embodiments described above. However, the invention is not limited to this process, for example, the image signals may be sent to the image signal output by each kind of the signals. In this case, similar advantages of the invention can also be obtained.

While the lenticular lens can be disposed with a distance from the liquid crystal panel 3 in the first, second and third embodiments, it can be provided in close contact with the liquid crystal panel if it is capable of condensing the light from the light source at a predetermined position.

While the third embodiment used the liquid crystal panel of the first embodiment, the liquid crystal panel of the second embodiment may also be used instead. In this case, similar advantages as those obtained with respect to the second embodiment can also be obtained.

While the organic electroluminescence device and the liquid crystal panel are separately formed as shown in FIG. 2 (a) in the embodiments described above, the structure is not limited in this manner. For example, the light source can be disposed on the surface opposite to the first transparent substrate. Namely, each pixel may be disposed in close contact with the emitting regions. In this case, the device can be made smaller and thinner.

While a transmission type image display panel is used in the embodiments, the display panels are not limited to these types of liquid crystal panels so long as they are capable of displaying images by transmitting light therethrough. For example, those formed from PLZT can be used.

The lenticluar lens is used for the light directing member in the first and the second embodiments and the parallax barrier is used in the third embodiment. However, any member can be used as long as it is capable of directing light from the light source, for example, a convex lens or a cross lenticular lens can also be used. In this case, parallax can be provided, not only in the horizontal direction, but also in the vertical direction.

A lenticular lens can be disposed at the vertical slit portions of the parallax barrier of the third embodiment. In this case, the light distribution efficiency can be improved.

Therefore, the present examples and embodiments are to be considered as illustrative and not restrictive and the invention is not to be limited to the details given herein, but may be modified within the scope and equivalence of the appended claims.

A display device that can be made to be smaller and thinner. The display device includes a light source including a plurality of emitting regions disposed in a plane, a light emission controller which performs switching control of each emitting region between an illuminating state and a blacked out state, a transmission type image display panel including a plurality of pixels through which light emitted from the light source is transmitted, an image signal output which sends each pixel a set of associated image data, and a light directing member which includes a structure for directing light that has passed through the pixels and which is disposed opposingly to the transmission type image display panel. A set of the emitting regions are arranged in the horizontal direction of the transmission type image display panel to oppose to an associated pixel of the transmission type image display panel.

## Claims

1. A display device comprising a light source including a plurality of emitting regions disposed in a plane, a light emission controller which performs switching control of each emitting region between its illuminating state and blacked out state, a transmission type image display panel including a horizontal direction and a plurality of pixels through which light emitted from the light source is transmitted to display an image on the display panel, an image signal output which sends each pixel a set of associated image data, and a light directing member which includes a structure for directing light that has passed through the pixels and which is disposed opposingly to the transmission type image display panel, **characterized by** a set of the emitting regions 7-14 being arranged in the horizontal direction of the transmission type image display panel to oppose an associated pixel 16 of the transmission type image display panel, the image signal output 4 sequentially sending each pixel 16 a set of associated image data for a plurality of images, and the light emission controller 5 controlling each emitting region 7-14 to illuminate only a part of the plurality of the emitting regions 7-14 and to sequentially switch the illuminated emitting regions 7-14.

2. A display device according to claim 1 **characterized by** the transmission type image displaypanel displays colored images and each of the pixels 16 respectively displays red, blue or green.

3. A display device according to claim 1 or 2 **characterized by** the transmission type image display panel includes a vertical direction and the pixels 16 of the transmission type image display panel are divided into three sections arranged in the vertical direction of the transmission type image display panel and each of which has a display region of red, blue and green.

4. A display device according to any one of claims 1 to 3 **characterized by** the light emission controller 5 controls the illumination of the emitting regions 7-14 that are opposed to pixels 16 of the transmission type image display panel at the same time with the switching of the pixels for the plurality of images displayed on the display panel.

5. A display device according to any one of claims 1 to 4 **characterized by** the light source being an area light emitting device.

6. A display device according to any one of claims 1 to 5 **characterized by** the transmission type image display panel being a liquid crystal panel 3.

7. A display device according to any one of claims 1 to 6 **characterized by** the directing member being a lenticular lens 6.

8. A display device according to any one of claims 1 to 6 **characterized by** the directing member being a parallax barrier 87.

9. A display device according to any one of claims 1 to 8 **characterized by** the light directed by the light directing member converging to at least two observation points A-H.

10. A display device according to claim 9 **characterized by** the two observation points A-H being separated with a distance 41 corresponding to a parallax or a distance shorter than the parallax.

11. A display device comprising a light source including a plurality of emitting regions disposed in a plane, a transmission type image display panel including a horizontal direction and a plurality of pixels through which light emitted from the light source is transmitted for the display panel to enable display of an image, and a light directing member disposed to oppose the transmission type image display panel and including a means for directing the light from the light source, **characterized by** the emitting regions 7-14 of the light source being arranged in the horizontal direction of the transmission type image display panel 1 to oppose a pixel 16 of the transmission type image display panel 1.

12. A display device according to claim 11 **characterized by** the transmission type image display panel displaying colored images and each of the pixels 16 respectively displays red, blue or green.

13. A display device according to claim 11 or 12 **characterized by** the transmission type image display panel including a vertical direction and the pixels 16 of the transmission type image display panel are divided into three sections arranged in the vertical direction of the transmission type image display panel and each of which has a display region of red, blue and green.

14. A display device according to any one of claims 11 to 13 **characterized by** a plurality of images being displayed on the display panel and the light emission controller 4 controlling the illumination of the emitting regions 7-14 that are opposed to pixels 16 of the transmission type image display panel at the same time with the switching of the pixels 16 for the plurality of images displayed on the display panel.

15. A display device according to any one of claims 11 to 14 **characterized by** the light source being an area light emitting device.

16. A display device according to any one of claims 11 to 15 **characterized by** the transmission type image display panel being a liquid crystal panel 3.

17. A display device according to any one of claims 11 to 16 **characterized by** the directing member being a lenticular lens 6.

18. A display device according to any one of claims 11 to 16 **characterized by** the directing member being a parallax barrier 87.

19. A display device according to any one of claims 11 to 18 **characterized by** the light directed by the light directing member converging to at least two observation points A-H.

20. A display device according to claim 19 **characterized by** the two observation points A-H being separated with a distance corresponding to a parallax or a distance shorter than the parallax.
